# FASCICULE DE BREVET EUROPEEN

(11) **EP 4 293 556 B1**
(45) Date de publication et mention de la délivrance du brevet: **15.07.2026**
(21) Numéro de dépôt: 23179023.9
(22) Date de dépôt: 13.06.2023
(51) Int. Cl.: G06F 21/60, G06F 21/62

(54) **DISPOSITIF DE LABELLISATION DE DONNÉES ET PROCÉDÉ DE LABELLISATION ASSOCIÉ**
DATENETIKETTENIERVORRICHTUNG UND MARKIERUNGSVERFAHREN DAFÜR
DATA LABELING DEVICE AND LABELING METHOD THEREFOR

(30) Priorité: 14.06.2022 FR 2205734
(43) Date de publication de la demande: 20.12.2023
(73) Titulaire: THALES, 92400 Courbevoie (FR)
(72) Inventeur: WIOREK, Jean-François, 78141 VELIZY CEDEX (FR); GASNIER, Franck, 49309 CHOLET (FR)
(74) Mandataire: Lavoix

(56) Documents cités:
- US-A1- 2016 171 079
- US-A1- 2018 197 105
- KONGSGARD KYRRE WAHL ET AL: "Policy-based labelling: A flexible framework for trusted data labelling", 2015 INTERNATIONAL CONFERENCE ON MILITARY COMMUNICATIONS AND INFORMATION SYSTEMS (ICMCIS), MILITARY UNIVERSITY OF TECHNOLOGY, 18 May 2015 (2015-05-18), pages 1 - 10, XP033176294, DOI: 10.1109/ICMCIS.2015.7158708

## Description

La présente invention concerne un dispositif électronique de labellisation de données. La présente invention concerne en outre un procédé de labellisation de données.

Dans le domaine de la gestion de données, tel que par exemple dans le contrôle de la divulgation de données aux sensibilités variées, différentes approches sont envisageables.

De façon classique, il est connu de limiter l'accès aux données par le contrôle de l'accès aux supports des données. Ainsi, le contrôle de l'accès aux données d'une sensibilité déterminée est mis en oeuvre par un contrôle de l'accès au support contenant ou transportant ces données. A ce titre, on connait par exemple des réseaux de différents niveaux de confidentialité, contenant des données de différentes confidentialités, le contrôle de l'accès aux données étant effectué en contrôlant l'accès aux différents réseaux.

Un tel mode de contrôle de l'accès aux données ne donne toutefois pas entière satisfaction dans la mesure où le contrôle de l'accès aux données est effectué de manière indirecte. Aucune mesure ne permet en effet de limiter l'accès aux données si ces données échappent à un support dont l'accès est contrôlé.

A cet effet, une approche centrée sur les données en tant que telles a récemment été développée. Cette approche, connue sous le nom de DCS (de l'anglais « *Data Centric Security »)* vise notamment à associer des labels aux données afin de caractériser la sensibilité des données directement au niveau des données et non seulement au niveau des supports de données. La norme OTAN (acronyme de *« Organisation du traité de l'Atlantique Nord* ») STANAG 4778 (acronyme de *« Standardization Agreement »,* en français *« Accords de normalisation »)* vient par exemple définir les mécanismes d'association entre une donnée et son label, afin de caractériser la sensibilité d'une donnée au niveau de la donnée. Ainsi, il est possible de déterminer la sensibilité d'une donnée grâce au label qui lui est associé et non uniquement grâce au réseau sur lequel transite la donnée. On comprend ici qu'une sensibilité, ou un niveau de sensibilité, est défini par de multiples attributs, dont par exemple un attribut relatif à un niveau de confidentialité, un attribut relatif à une restriction géographique sur la diffusion de la donnée, un attribut relatif au caractère médical de la donnée, etc...

On connait alors des dispositifs électroniques de labellisation venant associer des labels à des données. De tels dispositifs sont conçus pour labelliser des données dans un environnement ayant une sensibilité donnée et il est alors nécessaire d'utiliser plusieurs dispositifs électroniques distincts pour labelliser des données dans différents environnements.

De tels dispositifs électroniques de labellisation ne donnent alors pas entière satisfaction en raison de leur faible versatilité. En outre, de tels dispositifs ne contrôlent pas la sensibilité des données labellisées et des erreurs de labellisation peuvent avoir lieu. ONGSGARD KYRRE WAHL ET AL: "Policy-based labelling: A flexible framework for trusted data labelling" divulgue un système dans lequel des données sont traités par des modules d'attributs (Attribute modules plug-ins) qui renvoient des attributs à un point de décision PDP.

Un des buts de l'invention est alors de proposer un dispositif électronique de labellisation versatile et limitant les erreurs de labellisation.

A cet effet, l'invention a pour objet un dispositif électronique de labellisation de données, configuré pour associer un label à une donnée, le dispositif électronique de labellisation comprenant :
- un module d'acquisition, configuré pour acquérir une donnée à labelliser,
- un module de détermination, configuré pour, en fonction de la donnée à labelliser acquise, déterminer au moins un attribut représentatif d'une sensibilité associée à ladite donnée ;
- un module de labellisation, comprenant une pluralité de blocs de labellisation, chaque bloc de labellisation étant associé à une sensibilité représentée par au moins un attribut,
le module de détermination étant configuré pour transmettre la donnée acquise au bloc de labellisation dont l'au moins un attribut représentant la sensibilité correspond à un ou des attributs déterminé(s) par le module de détermination, ledit bloc de labellisation étant configuré pour produire une donnée labellisée en associant à la donnée acquise un label représentatif de l'au moins un attribut déterminé.

L'utilisation d'un module de détermination ainsi que d'un module de labellisation comprenant plusieurs blocs de labellisation est particulièrement avantageuse, un tel module de labellisation permettant d'assurer une ségrégation des données traitées et leur traitement par des blocs de labellisation distincts aux sensibilités distinctes. L'utilisation de plusieurs modules de labellisation permet alors le traitement de différentes sensibilités au sein d'un seul dispositif. La présence d'un tel module de détermination limite en outre d'éventuelles erreurs de labellisation.

Suivant d'autres aspects avantageux de l'invention, le dispositif électronique de labellisation comprend une ou plusieurs des caractéristiques suivantes, prises isolément ou suivant toutes les combinaisons techniquement possibles :
- le module de détermination est réalisé sous la forme d'au moins un circuit ASIC ou FPGA ;
- le module de labellisation comprend trois blocs de labellisation ;
- le dispositif comprend un premier module d'analyse complémentaire connecté au module de détermination, le premier module d'analyse complémentaire étant configuré pour, en fonction de la donnée à labelliser acquise, déterminer une première donnée d'analyse représentative d'un attribut représentatif d'un niveau de sensibilité associé à ladite donnée, le module de détermination étant configuré pour déterminer l'au moins un attribut représentatif d'une sensibilité associée à ladite donnée en outre en fonction de la première donnée d'analyse déterminée par le premier module d'analyse complémentaire ;
- le dispositif comprend un deuxième module d'analyse complémentaire connecté au module de détermination, le deuxième module d'analyse complémentaire étant configuré pour acquérir une deuxième donnée d'analyse complémentaire depuis une interface homme machine, le module de détermination étant configuré pour déterminer l'au moins un attribut représentatif d'une sensibilité associée à ladite donnée en outre en fonction de la deuxième donnée d'analyse complémentaire acquise par le deuxième module d'analyse complémentaire ;
- le module de détermination est configuré pour acquérir un label à associer à la donnée à labelliser, ledit bloc de labellisation étant configuré pour produire une donnée labellisée en fonction dudit label acquis ;
- le module de détermination est configuré pour associer une signature au label acquis, ledit bloc de labellisation étant configuré pour produire une donnée labellisée en outre en fonction de la signature ;
- le module de détermination est configuré pour déterminer la cohérence entre le label acquis et l'au moins un attribut représentant la sensibilité déterminé,
   le module de détermination étant configuré pour transmettre la donnée acquise et le label acquis audit bloc de labellisation seulement si le label acquis et l'au moins un attribut représentant la sensibilité déterminé sont cohérents ;
- le module d'acquisition comprend une pluralité de blocs d'acquisition, chaque bloc d'acquisition étant associé à au moins un attribut représentatif d'un niveau de sensibilité, chaque bloc d'acquisition étant configuré pour acquérir une donnée et un label dont un ou des attributs sont représentatif(s) d'une sensibilité correspondant à l'au moins un attribut associé audit bloc d'acquisition ;
- le dispositif comprend un module d'identification configuré pour identifier un utilisateur du dispositif, le module d'identification étant configuré pour déterminer le bloc d'acquisition attribué à l'utilisateur en fonction de l'identification de l'utilisateur ; et
- la donnée labellisée par le label est chiffrée par une clé à laquelle le label est associé.

L'invention concerne en outre un procédé de labellisation mis en oeuvre par un dispositif électronique de labellisation tel que précité, dans lequel le procédé comprend les étapes suivantes :
- acquisition d'une donnée à labelliser,
- détermination, en fonction de la donnée à labelliser acquise, d'au moins un attribut représentatif d'une sensibilité associée à ladite donnée, et
- labellisation, par association à la donnée acquise d'un label représentatif de l'au moins un attribut déterminé, pour produire une donnée labellisée.

L'invention sera mieux comprise à la lecture de la description qui va suivre, donnée uniquement à titre d'exemple non limitatif et faite en se référant aux figures suivantes, dans lesquelles :
[Fig 1] la figure 1 est une représentation schématique générale d'un dispositif électronique de labellisation selon l'invention ;
[Fig 2] la figure 2 est une représentation schématique détaillée du dispositif électronique de la figure 1 ; et
[Fig 3] la figure 3 est un organigramme représentatif d'un procédé de labellisation mis en oeuvre par le dispositif de la figure 1.

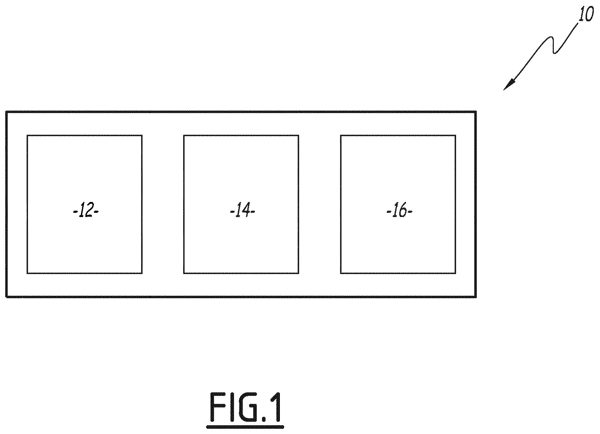

En référence à la figure 1, un dispositif électronique de labellisation de données 10 comprend un module d'acquisition 12, un module de détermination 14 et un module de labellisation 16.

Le dispositif électronique de labellisation de données 10, aussi appelé par la suite dispositif de labellisation 10, comprend en outre par exemple un premier module d'analyse complémentaire 18 et/ou un deuxième module d'analyse complémentaire 20.

Le dispositif de labellisation 10 comprend en outre par exemple un module d'identification 22.

Le dispositif de labellisation 10 est configuré pour associer un label L à une donnée D afin de former une donnée labellisée LD. Le dispositif de labellisation est par exemple configuré pour former la donnée labellisée en associant un label L à une donnée D à l'aide d'un lien B.

La donnée D est une donnée de tout type. En particulier, la donnée D est soit une donnée formant un fichier unitaire, soit une donnée formant un flux de données. Lorsque la donnée D forme un fichier unitaire, la donnée D est par exemple un fichier texte comprenant par exemple un code informatique, un fichier d'image, un fichier de vidéo, ou tout autre fichier unitaire. Lorsque la donnée D forme un flux de données, la donnée est par exemple un tronçon d'un flux de données, tel un flux de données de mesure, un flux de données audio ou vidéo, ou de tout autre flux de données.

Le label L est par exemple représentatif d'au moins un attribut caractérisant une sensibilité d'une donnée. Dans un mode de réalisation particulier, le label est représentatif d'une pluralité d'attributs caractérisant une sensibilité d'une donnée. On considère ainsi un label comme associé à un niveau de sensibilité, un label dont les attributs sont représentatifs de l'ensemble des attributs associés audit niveau de sensibilité. On comprendra alors qu'un tel label peut être représentatif de plus d'attributs que l'ensemble des attributs associés au niveau de sensibilité.

On comprend alors qu'une sensibilité, aussi appelée niveau de sensibilité dans la description, est représenté par au moins un attribut, et de préférence une pluralité d'attributs. L'ensemble des attributs associés au niveau de sensibilité définissent alors ensemble le niveau de sensibilité.

Comme cela sera décrit plus en détails par la suite, une sensibilité est ainsi par exemple décrite par une pluralités d'attributs tels que définis dans une politique de labellisation. A titre d'exemple, la norme STANAG 4774 définit comment utiliser les attributs d'une politique de labellisation de l'OTAN.

Une politique de labellisation définit alors un ensemble d'attribut définissant un niveau de sensibilité, et, pour chaque attribut, un ensemble de valeurs possibles adoptées par ledit attribut.

Un attribut caractérisant le niveau de sensibilité peut par exemple être représentatif d'un niveau de confidentialité tel que déterminé par la défense nationale. La valeur d'un tel attribut est par exemple choisie dans la liste consistant en les éléments suivants : Non protégé, Diffusion restreinte, Secret, Très secret.

Un attribut caractérisant le niveau de sensibilité peut par exemple être représentatif d'un niveau de confidentialité tel que déterminé par l'OTAN. La valeur d'un tel attribut est par exemple choisie dans la liste consistant en les éléments suivants : NATO Restricted, NATO confidential, NATO Secret, Cosmic Top Secret.

On comprendra que de tels attributs représentatifs d'un niveau de confidentialité définissent généralement une hiérarchie de confidentialité. Ainsi un attribut représentatif d'un niveau de confidentialité NATO Secret est représentatif d'un niveau de confidentialité supérieur à un niveau de confidentialité NATO confidential au sens de l'OTAN, de sorte qu'un utilisateur habilité par l'OTAN à consulter une donnée dont la confidentialité est caractérisée par un attribut dont la valeur est NATO Secret, est aussi habilité à consulter une donnée dont la confidentialité est caractérisée par un attribut dont la valeur est NATO confidential.

Un attribut caractérisant le niveau de sensibilité peut par exemple être représentatif de restrictions propre à une nationalité et/ou un territoire. La valeur d'un tel attribut est par exemple un caveat de type « *eyes-only »,* terme anglais pour *yeux seulement,* un tel attribut étant représentatif d'une information dont la divulgation est restreinte à une nationalité et/ou un territoire donné.

Les attributs se rapportent par exemple en outre à : la sensibilité médicale, une liste de pays où l'accès à la donnée est restreint, un groupe de personne, etc...

Ainsi, un niveau de sensibilité est par exemple caractérisé par un attribut représentatif d'un niveau de sensibilité tel que défini par la défense nationale et par un attribut représentatif de restrictions propres à une nationalité. Le label L est alors représentatif de ces deux attributs, un tel label prenant par exemple une valeur « Secret » pour l'attribut représentatif d'un niveau de sensibilité tel que défini par la défense nationale et « UK eyes only » pour l'attribut représentatif de restrictions propres à une nationalité, un tel label caractérisant une donnée secrète dont la diffusion est restreinte au Royaume-Uni.

Dans une variante particulière, la donnée labellisée par le label L est chiffrée par une clé à laquelle le label L est associé.

Le chiffrement est par exemple un chiffrement ABE de l'anglais *« Attribute Based Encryption ».*

Le lien B est par exemple une donnée associant le label L à la donnée D.

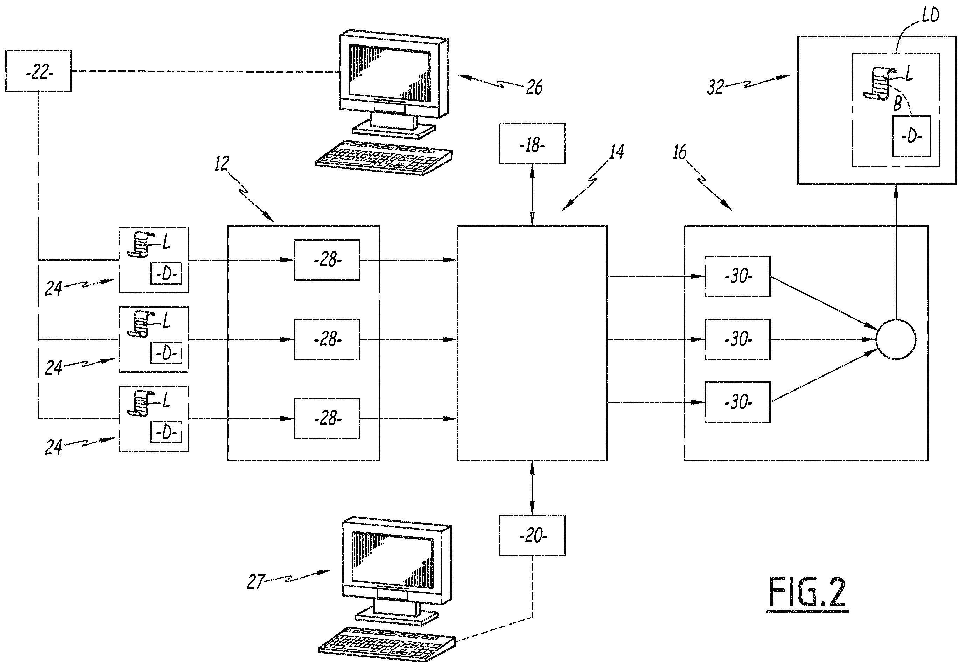

Le module d'acquisition des données 12 est configuré pour acquérir une donnée à labelliser D. Dans le mode de réalisation présenté en figure 2, le module d'acquisition des données 12 est en outre configuré pour acquérir un label L. Comme cela sera exposé plus loin, et dans des modes de réalisation alternatifs, le module d'acquisition des données 12 n'est pas configuré pour acquérir un label L, le module de détermination 14 étant alors configuré pour déterminer un label L à associer à la donnée D à labelliser.

Le module d'acquisition des données est par exemple connecté à une source de données 24 sur laquelle est stockée et/ou transite la donnée D.

Le module d'acquisition des données 12 est par exemple en outre connecté à une première interface homme-machine 26, par laquelle l'utilisateur peut commander l'acquisition de la donnée D depuis la source de données 24 par le module d'acquisition 12, et dans le mode de réalisation présenté en figure 2, l'acquisition du label L depuis la source de données 24 par le module d'acquisition 12.

Dans un premier mode de réalisation, et comme illustré en figure 2, le module d'acquisition des données 12 comprend par exemple une pluralité de blocs d'acquisition 28.

Chaque bloc d'acquisition 28 est par exemple associé à un niveau de sensibilité déterminé, les niveaux de sensibilité de chaque bloc d'acquisition étant de préférence différents entre eux. Dans le premier mode de réalisation, chaque bloc d'acquisition 28 est alors de préférence configuré pour acquérir une donnée D et un label L, et en particulier une donnée D et un label L dont le niveau de sensibilité correspond au niveau de sensibilité associé audit bloc 28. On comprendra par label L dont le niveau de sensibilité correspond au niveau de sensibilité associé audit bloc, que la valeur d'attributs du label correspond aux valeurs d'attributs correspondants au niveau de sensibilité associé audit bloc.

Dans une variante non représentée, la source de données 24 présente un unique niveau de sensibilité. Dans une autre variante non représentée, la source de données 24 présente une pluralité de niveaux de sensibilité pour le stockage et/ou le transit de données, et/ou de labels, associés à des niveaux de sensibilité différents. Dans l'exemple de la figure 2, la source de données 24 est formée par une pluralité de sources distinctes.

La source de données 24 est par exemple formée par au moins une mémoire et/ou au moins un réseau informatique.

Ainsi, pour un bloc d'acquisition associé à un niveau de sensibilité caractérisé par un attribut représentatif d'un niveau de confidentialité secret, le bloc d'acquisition 28 est configuré pour acquérir une donnée depuis une source dont le niveau de confidentialité est « secret » et un label dont l'un des attributs correspond au niveau de confidentialité « secret »

Dans la variante illustrée en figure 2, le module d'acquisition 12 comprend trois blocs d'acquisition 28, chacun des blocs d'acquisition 28 étant associé à un niveau de sensibilité différent. Par exemple, un premier bloc d'acquisition 28 est associé à un niveau de sensibilité caractérisé par un attribut tel que défini plus haut dont la valeur est « Diffusion restreinte », un deuxième bloc d'acquisition 28 est associé à un niveau de sensibilité caractérisé par un attribut tel que défini plus haut dont la valeur est « Secret » et un troisième bloc d'acquisition 28 est associé à un niveau de sensibilité caractérisé par un attribut tel que défini plus haut dont la valeur est « Très Secret ». On comprendra que le module d'acquisition 12 peut comprendre un nombre quelconque de blocs d'acquisition 28.

Dans un premier mode de réalisation, et comme illustré en figure 2, le module d'identification 22 est configuré pour identifier un utilisateur du dispositif de labellisation 10. Le module d'identification 22 est par exemple configuré pour identifier un utilisateur du dispositif de labellisation 10 en fonction d'un réseau informatique utilisé par l'utilisateur. En variante ou en complément, le module d'identification 22 est configuré pour identifier l'utilisateur du dispositif de labellisation 10 en fonction d'un identifiant de l'utilisateur. A cet effet, le module d'identification 22 est par exemple connecté à l'interface homme machine 26, par laquelle l'utilisateur peut transmettre un identifiant au module d'identification 22.

Dans le premier mode de réalisation, le module d'identification 22 est configuré pour déterminer le bloc d'acquisition 28 attribué à l'utilisateur en fonction de l'identification de l'utilisateur. Ainsi, et par exemple, pour un utilisateur dont l'identifiant est associé à un niveau de sensibilité caractérisé par un attribut de confidentialité dont la valeur est « Secret », le module d'identification 22 est configuré pour attribuer le bloc d'acquisition associé à un niveau de sensibilité caractérisé par un attribut représentatif d'un niveau de confidentialité « Secret » à l'utilisateur.

Dans une variante particulière, le module d'identification 22 détermine le bloc d'acquisition attribué à l'utilisateur en fonction de l'identification de l'utilisateur et d'une instruction de l'utilisateur. L'utilisateur est par exemple apte à requérir l'attribution à un bloc d'acquisition par l'intermédiaire de l'interface homme-machine 26, l'interface homme-machine communiquant cette requête au module d'identification 22 sous la forme d'une instruction de l'utilisateur. Le module d'identification attribue alors par exemple le bloc d'acquisition correspondant à l'instruction de l'utilisateur, sous réserve que l'identification de l'utilisateur autorise une telle attribution. L'instruction est par exemple une demande de labellisation à un niveau de sensibilité donné.

Dans le cas des niveaux de confidentialité, et en raison de la hiérarchie de tels niveaux évoquée plus haut, le module d'identification 22 est par exemple configuré pour attribuer un bloc d'acquisition associé à un niveau de sensibilité dont l'attribut est représentatif d'un niveau de sensibilité« Secret » à un utilisateur dont l'identifiant est associé à un niveau de sensibilité dont un attribut est représentatif d'un niveau de confidentialité « Très Secret » et lorsque l'instruction de l'utilisateur comprend une requête d'attribution au bloc d'acquisition associé à un niveau de sensibilité dont l'attribut est représentatif d'un niveau de confidentialité « Secret ».

Le module d'identification 22 est par exemple configuré pour ne pas attribuer un bloc d'acquisition associé à un niveau de sensibilité dont un attribut est représentatif d'un niveau de confidentialité « Très Secret » à un utilisateur dont l'identifiant est associé à un niveau de sensibilité dont un attribut est représentatif d'un niveau de confidentialité « Secret » et que l'instruction de l'utilisateur comprenant une requête d'attribution au bloc d'acquisition associé à un niveau de sensibilité dont un attribut est représentatif d'un niveau de confidentialité « Très Secret ».

Le module d'acquisition 12 est alors configuré pour acquérir la donnée D et, dans l'exemple de la figure 2, le label L, par l'intermédiaire du bloc d'acquisition 28 déterminé.

Dans un mode de réalisation non illustré, le module d'acquisition 12 ne comprend qu'un bloc d'acquisition 28. Le bloc d'acquisition 28 est alors configuré pour acquérir une donnée D et un label L de la source de données 24, et ce peu importe le niveau de sensibilité auquel correspond la donnée D et le label L.

Le module de détermination 14 est réalisé sous forme d'un composant logique programmable, tel qu'un FPGA (de l'anglais *Field Programmable Gate Array),* ou encore sous forme d'un circuit intégré dédié, tel qu'un ASIC (de l'anglais *Application Specific Integrated Circuit).*

Le module de détermination 14 est configuré pour, en fonction de la donnée à labelliser D acquise, déterminer un niveau de sensibilité associé à ladite donnée.

Le module de détermination 14 est par exemple configuré pour lire la donnée D acquise, et pour, en fonction de la lecture de la donnée D acquise, déterminer un niveau de sensibilité associé à ladite donnée, c'est-à-dire au les valeurs d'au moins un attribut représentatif d'une sensibilité associée à la donnée D.

Le module de détermination 14 est, dans le premier mode de réalisation, configuré pour acquérir un label L à associer à la donnée D à labelliser. En particulier, selon le premier mode de réalisation, le module de détermination est configuré pour acquérir le label L depuis le module d'acquisition 12.

Le module de détermination 14 est par exemple configuré pour lire la donnée D acquise et pour déterminer le niveau de sensibilité en fonction de la lecture de la donnée D acquise.

Dans un exemple spécifique, le module de détermination 14 est configuré pour lire un entête de la donnée D acquise et pour déterminer le niveau de sensibilité en fonction de cet entête. Le module de détermination 14 est alors par exemple configuré pour déterminer les attributs représentatifs du niveau de sensibilité ainsi que les valeurs desdits attributs en fonction de cette lecture. Dans le cas où la donnée D est un document, le module de détermination est alors par exemple configuré pour déterminer le niveau de sensibilité associé à la donnée D en fonction de l'entête du document.

Dans un autre exemple, le module de détermination 14 est configuré pour rechercher dans la donnée D des mots clés représentatifs d'un niveau de sensibilité pour déterminer le niveau de sensibilité associé à la donnée D.

En référence à la figure 2 où le dispositif comprend un premier module d'analyse complémentaire 18, le premier module d'analyse complémentaire 18 est connecté au module de détermination 14.

Le premier module d'analyse complémentaire 18 est configuré pour, en fonction de la donnée D à labelliser, déterminer une première donnée d'analyse AD1 représentative d'un niveau de sensibilité associé à ladite donnée.

Le premier module d'analyse complémentaire 18 est par exemple configuré pour déterminer une première donnée d'analyse AD1 représentative d'un niveau de sensibilité associé à ladite donnée D en lisant ladite donnée.

Le premier module d'analyse complémentaire 18 met par exemple en oeuvre un réseau neuronal artificiel entrainé pour déterminer une première donnée d'analyse AD1 représentative d'un niveau de sensibilité à partir d'une donnée D.

Le module de détermination 14 est alors configuré pour déterminer le niveau de sensibilité associé à ladite donnée D en outre en fonction de la première donnée d'analyse AD1 déterminée par le premier module d'analyse complémentaire. Ainsi, et par exemple, le module de détermination 14 détermine un niveau de sensibilité semblable au niveau de sensibilité déterminé par le module d'analyse complémentaire 18.

En référence à la figure 2 où le dispositif comprend un deuxième module d'analyse complémentaire 20, le deuxième module d'analyse complémentaire 20 est connecté au module de détermination 14.

Le deuxième module d'analyse complémentaire 20 est par exemple configuré pour acquérir une deuxième donnée d'analyse AD2 représentative d'un niveau de sensibilité associé à la donnée D.

Le deuxième module d'analyse complémentaire 20 est par exemple connecté à une deuxième interface homme-machine 27. Le deuxième module d'analyse complémentaire est par exemple configuré pour commander l'affichage de la donnée D sur l'interface homme machine 27 et est par exemple configuré pour commander l'affichage du label L sur l'interface homme machine 27.

Le deuxième module d'analyse complémentaire 20 est alors par exemple configuré pour recevoir une deuxième donnée d'analyse AD2 depuis l'interface homme machine 27 et pour transmettre la deuxième donnée d'analyse AD2 au module de détermination. Un utilisateur peut ainsi, par l'intermédiaire du deuxième module d'analyse complémentaire, fournir la deuxième donnée d'analyse AD2 au module de détermination résultant d'une analyse manuelle effectuée par l'utilisateur sur la donnée D.

Le module de détermination 14 est alors configuré pour déterminer le niveau de sensibilité associé à ladite donnée D en outre en fonction de la deuxième donnée d'analyse AD2 déterminée par le deuxième module d'analyse complémentaire 20. Ainsi, et par exemple, le module de détermination 14 détermine un niveau de sensibilité semblable au niveau de sensibilité déterminé par le module d'analyse complémentaire 20.

Le deuxième module d'analyse complémentaire 20 permet ainsi à un utilisateur de commander au module de détermination 14 la détermination d'un label L ou la modification d'un label L.

Le premier 18 et le deuxième 20 modules d'analyse complémentaire, ainsi que par exemple le module d'acquisition 12 et le module de labellisation 16, sont par exemple réalisés sous forme d'un ou plusieurs logiciels, c'est-à-dire sous forme d'un programme d'ordinateur, ils sont en outre aptes à être enregistrés sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, un disque magnétique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module de détermination 14 est configuré pour transmettre la donnée D ainsi que le label L associé à cette donnée, acquis par le module d'acquisition 12, au module de labellisation 16.

Comme illustré en figure 2, le module de labellisation 16 comprend une pluralité de blocs de labellisation 30. En particulier, dans l'exemple de la figure 2, le module de labellisation 16 comprend trois blocs de labellisation.

Chaque bloc de labellisation 30 est associé à un niveau de sensibilité déterminé, et de préférence différent. Par exemple, le module de labellisation 16 comprend un premier bloc de labellisation 30 associé à un niveau de sensibilité dont un attribut est représentatif d'un niveau de confidentialité « Diffusion restreinte », un deuxième bloc de labellisation 30 associé à un niveau de sensibilité dont un attribut est représentatif d'un niveau de confidentialité « Secret » et un troisième bloc de labellisation 30 associé à un niveau de sensibilité dont un attribut est représentatif d'un niveau de confidentialité « Très Secret ».

On comprendra que le module de labellisation 16 peut comprendre un nombre quelconque de blocs de labellisation 30.

Le module de détermination 14 est alors configuré pour transmettre la donnée D acquise au bloc de labellisation 30 dont le niveau de sensibilité correspond au niveau de sensibilité déterminé par le module de détermination 14.

Le module de détermination 14 est configuré pour ne pas transmettre la donnée D acquise au bloc de labellisation 30 lorsque le niveau de sensibilité déterminé par le module de détermination 14 ne correspond à aucun niveau de sensibilité associés aux blocs de labellisation. Ainsi, si comme vu plus haut, le module de détermination 14 détermine un niveau de sensibilité dont un attribut est représentatif d'un niveau de confidentialité « Secret » associé à la donnée D, le module de détermination transmet la donnée D au bloc de labellisation 30 dont le niveau de sensibilité dont un attribut est représentatif d'un niveau de confidentialité « Secret ».

Le module de labellisation 16 est configuré pour produire une donnée labellisée LD en associant à la donnée D acquise un label associé au niveau de sensibilité déterminé, c'est-à-dire dont le niveau de sensibilité correspond au niveau de sensibilité déterminé par le module de détermination 14. Le label L est en particulier fourni au module de labellisation 16 par le module de détermination 14. En particulier, le bloc de labellisation 30 auquel la donnée D est transmise est configuré pour produire la donnée labellisée LD.

Lorsque le module de détermination est configuré pour acquérir, respectivement pour déterminer, un label L à associer à la donnée à labelliser, ledit bloc de labellisation est configuré pour produire une donnée labellisée en fonction dudit label acquis, respectivement déterminé, par le module de détermination 14.

On comprendra alors que le label peut être représentatif de plus d'attributs que les attributs représentatifs du niveau de sensibilité.

En outre, lorsque le module de détermination 14 est configuré pour acquérir, respectivement pour déterminer, un label L à associer à la donnée D à labelliser, le module de détermination 14 est par exemple configuré pour associer une signature au label acquis, respectivement déterminé. Le module de labellisation 16, et en particulier le bloc de labellisation 30, est alors en outre configuré pour produire une donnée labellisée LD en fonction de la signature. Par exemple, le module de labellisation 16 est configuré pour ne produire la donnée labellisée LD que si la signature est conforme à une signature attendue par le module de labellisation 16. Le module de labellisation est ainsi configuré pour ne pas produire la donnée labellisée LD lorsque la signature n'est pas conforme à une signature attendue par le module de labellisation 16.

Dans le premier mode de réalisation, dans lequel le module de détermination est configuré pour acquérir la donnée D et le label L depuis le module d'acquisition 12, le module de détermination est par exemple configuré pour déterminer la cohérence entre le label L acquis et le niveau de sensibilité associé à la donnée D acquise déterminé par le module de détermination 14.

Le module de détermination 14 est par exemple configuré pour déterminer une cohérence entre le label L acquis et le niveau de sensibilité déterminé si le label L acquis est représentatif du niveau de sensibilité déterminé. Par exemple, le module de détermination 14 est configuré pour déterminer la cohérence entre le label L acquis et le niveau de sensibilité déterminé si le label est représentatif d'un niveau de sensibilité semblable au niveau de sensibilité associé à la donnée déterminé, c'est-à-dire si la valeur d'attributs dont est représentatif le label correspond à la valeur des attributs représentatifs du niveau de sensibilité déterminés.

Selon ce mode de réalisation le module de détermination 14 est configuré pour transmettre la donnée acquise D et le label L acquis au bloc de labellisation 30 seulement si le label L acquis et le niveau de sensibilité déterminé sont cohérents. En d'autres termes le module de détermination 14 est configuré pour ne pas transmettre la donnée D acquise et le label L au bloc de labellisation 30 lorsque le label L acquis n'est pas cohérent au niveau de sensibilité déterminé.

Selon ce mode de réalisation, le module de labellisation 16, et plus particulièrement le bloc de labellisation 30 auquel la donnée D est transmise, est configuré pour associer le label L acquis par le module d'acquisition à la donnée acquise par la donnée D acquise par le module d'acquisition, sous réserve de la cohérence entre le label L et le niveau de sensibilité associé à la donnée D, telle que déterminée par le module de détermination.

Le module de labellisation 16 est par exemple connecté à une cible de données 32. Suite à leur labellisation Les données labellisées LD sont stockées sur, ou transitent par, la cible de données 32.

Dans l'exemple représenté en figure 2, la cible de données 32 présente un unique niveau de sensibilité, l'ensemble des données labellisées étant stockées, ou transitant par, la cible de données 32. Dans une variante non représentée, la cible de données 32 présente une pluralité de niveaux de sensibilité. Le module de labellisation 16 transmet alors la donnée labellisée à la portion de la cible de données dont le niveau de sensibilité est cohérent au niveau de sensibilité de la donnée labellisée. En variante, la cible de données 32 est formée par une pluralité de cibles distinctes, le module de labellisation transmettant alors la donnée labellisée à la cible distincte de données dont le niveau de sensibilité est cohérent au niveau de sensibilité de la donnée labellisée LD.

La cible de données 32 est par exemple formée par au moins une mémoire et/ou au moins un réseau informatique.

Un second mode de réalisation de l'invention va maintenant être présenté. Le second mode de réalisation diffère du premier mode de réalisation uniquement en ce qui suit. Les éléments analogues portent les mêmes références.

Dans le second mode de réalisation, le module d'acquisition est configuré pour acquérir une donnée à labelliser étant déjà labellisée. Dans ce second mode de réalisation, le dispositif électronique de labellisation 10 s'apparente à un dispositif de re-labellisation et/ou de changement de labellisation.

Le module de détermination 14 est en particulier configuré pour acquérir le label L de la donnée D depuis le module d'acquisition 12.

Comme dans le premier mode de réalisation, le module de détermination 14 est configuré pour déterminer le niveau de sensibilité de la donnée en fonction de la donnée D acquise. En complément, le module de détermination 14 est configuré pour déterminer le niveau de sensibilité de la donnée en fonction du label associé à la donnée acquise.

Le bloc de labellisation 30 auquel la donnée D est transmise est alors configuré pour labelliser la donnée D avec un nouveau label L dont le niveau de sensibilité correspond au niveau de sensibilité déterminé par le module de détermination. Le nouveau label L labellisant la donnée labellisée LD suite à la labellisation est différent du label L associé à la donnée labellisée acquise.

Par exemple, le label L labellisant la donnée acquise est un label n'étant pas associé à une clé de chiffrement de la donnée D, le nouveau label L labellisant la donnée labellisée LD suite à la labellisation étant un label associé à une clé de chiffrement, ou inversement.

Un troisième mode de réalisation de l'invention va maintenant être présenté. Le troisième mode de réalisation diffère des modes de réalisation précédemment décrits uniquement en ce qui suit. Les éléments analogues portent les mêmes références.

Dans le troisième mode de réalisation, et comme dans le deuxième mode de réalisation, le module d'acquisition est configuré pour acquérir une donnée à labelliser étant déjà labellisée. Dans ce troisième mode de réalisation, le dispositif électronique de labellisation 10 s'apparente à un dispositif de filtrage par labels. Le module de détermination 14 est en particulier configuré pour acquérir le label L de la donnée D depuis le module d'acquisition 12.

Le troisième mode de réalisation peut avantageusement être combiné au deuxième mode de réalisation pour à la fois filtrer et re-labelliser des données.

Le module de détermination 14 est configuré pour déterminer le niveau de sensibilité de la donnée en fonction de la donnée D acquise et en fonction du label L associé à la donnée acquise.

Selon ce mode de réalisation, le module de détermination 14 est configuré pour vérifier la cohérence entre le label L et une liste de labels autorisés.

Le module de détermination 14 est configuré pour transmettre au module de labellisation 16 et/, seulement la donnée D acquise et le label L associé à la donnée D acquise dont la cohérence avec la liste de labels autorisés est vérifiée.

On comprendra que la donnée D peut faire partie d'un paquet de données tel un fichier, seules les données D de ce paquet de données dont la cohérence avec le label L est vérifiée étant transmises.

Un quatrième mode de réalisation de l'invention va maintenant être présenté. Le quatrième mode de réalisation diffère des modes de réalisation précédemment décrits uniquement en ce qui suit. Les éléments analogues portent les mêmes références.

Le quatrième mode de réalisation s'apparente un dispositif de labellisation automatique.

Dans ce mode de réalisation, la donnée acquise D ne comprend pas de label et le module d'acquisition 12 n'acquiert pas de label L.

Le module de détermination 14 est alors configuré pour, en fonction du niveau de sensibilité associé à la donnée D déterminé, déterminer un label L pour ladite donnée.

Le module de labellisation est alors configuré pour produire une donnée labellisée en associant à la donnée acquise le label L déterminé par le module de labellisation 16.

Un procédé de labellisation 100 mis en oeuvre par un dispositif électronique de labellisation 10 tel que décrit plus haut va maintenant être présenté.

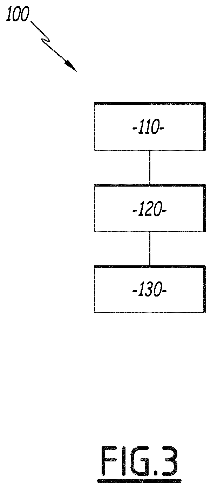

En référence à la figure 3, le procédé de labellisation 100 comprend une étape d'acquisition 110, une étape de détermination 120 et une étape de labellisation 130.

Lors de l'étape d'acquisition 110, une donnée D à labelliser est acquise par le module d'acquisition 12. Avec un dispositif 10 tel que présenté en figure 2, un label L est en outre par exemple acquis par le module d'acquisition 12 lors de l'étape d'acquisition.

Le module d'identification 22 détermine alors en outre l'un des blocs d'acquisition 28 attribué à l'utilisateur en fonction de l'identification de l'utilisateur lors d'une étape d'identification antérieure à l'étape d'acquisition 110. Dans ce mode de réalisation, le bloc d'acquisition attribué à l'utilisateur acquiert la donnée D à labelliser.

Lors de l'étape de détermination 120, le module de détermination 14 détermine un niveau de sensibilité associé à la donnée D à labelliser en fonction de ladite donnée D à labelliser.

Suite à l'étape de détermination 120, le module de détermination est configuré pour transmettre la donnée D acquise au bloc de labellisation 30 du module de labellisation 16 dont le niveau de sensibilité correspond au niveau de sensibilité déterminé lors de l'étape de détermination.

Lors de l'étape de labellisation 130, la donnée D est labellisée par association à la donnée D d'un label L associé au niveau de sensibilité déterminé lors de l'étape de détermination 120. En particulier, le bloc de labellisation 30 auquel est transmise la donnée D labellise la donnée en associant à la donnée un label L associé au niveau de sensibilité déterminé lors de l'étape de détermination 120.

## Revendications

1. Dispositif électronique de labellisation de données (10), configuré pour associer un label (L) à une donnée (D), le dispositif électronique de labellisation (10) comprenant :
- un module d'acquisition (12), configuré pour acquérir une donnée (D) à labelliser,
- un module de détermination (14), configuré pour, en fonction de la donnée (D) à labelliser acquise, déterminer au moins un attribut représentatif d'une sensibilité associée à ladite donnée (D) ;
- un module de labellisation (16), comprenant une pluralité de blocs de labellisation (30), chaque bloc de labellisation (30) étant associé à une sensibilité représentée par au moins un attribut,
le module de détermination (14) étant configuré pour transmettre la donnée (D) acquise au bloc de labellisation (30) dont l'au moins un attribut représentant la sensibilité correspond à un ou des attributs déterminé(s) par le module de détermination (14), ledit bloc de labellisation (30) étant configuré pour produire une donnée labellisée (LD) en associant à la donnée (D) acquise un label (L) représentatif de l'au moins un attribut déterminé.

2. Dispositif électronique de labellisation (10) selon la revendication 1, dans lequel le module de détermination (14) est réalisé sous la forme d'au moins un circuit ASIC ou FPGA.

3. Dispositif électronique de labellisation (10) selon la revendication 1 ou 2, dans lequel le module de labellisation (16) comprend trois blocs de labellisation (30).

4. Dispositif électronique de labellisation (10) selon l'une quelconque des revendications précédentes, comprenant un premier module d'analyse complémentaire (18) connecté au module de détermination (14), le premier module d'analyse complémentaire (18) étant configuré pour, en fonction de la donnée (D) à labelliser acquise, déterminer une première donnée d'analyse (AD1) représentative d'un attribut représentatif d'un niveau de sensibilité associé à ladite donnée (D), le module de détermination étant configuré pour déterminer l'au moins un attribut représentatif d'une sensibilité associée à ladite donnée (D) en outre en fonction de la première donnée d'analyse (AD1) déterminée par le premier module d'analyse complémentaire (18).

5. Dispositif électronique de labellisation selon l'une quelconque des revendications précédentes, comprenant un deuxième module d'analyse complémentaire (20) connecté au module de détermination (16), le deuxième module d'analyse complémentaire (20) étant configuré pour acquérir une deuxième donnée d'analyse complémentaire (AD2) depuis une interface homme machine (27), le module de détermination (14) étant configuré pour déterminer l'au moins un attribut représentatif d'une sensibilité associée à ladite donnée (D) en outre en fonction de la deuxième donnée d'analyse complémentaire (AD2) acquise par le deuxième module d'analyse complémentaire (20).

6. Dispositif électronique de labellisation (10) selon l'une quelconque des revendications précédentes, dans lequel le module de détermination (14) est configuré pour acquérir un label (L) à associer à la donnée (D) à labelliser, ledit bloc de labellisation (30) étant configuré pour produire une donnée labellisée (LD) en fonction dudit label acquis (L).

7. Dispositif électronique de labellisation (10) selon la revendication 6, dans lequel le module de détermination (14) est configuré pour associer une signature au label acquis, ledit bloc de labellisation (30) étant configuré pour produire une donnée labellisée (30) en outre en fonction de la signature.

8. Dispositif électronique de labellisation (10) selon l'une quelconque des revendications 6 ou 7, dans lequel le module de détermination (14) est configuré pour déterminer la cohérence entre le label (L) acquis et l'au moins un attribut représentant la sensibilité déterminé,
le module de détermination (14) étant configuré pour transmettre la donnée (D) acquise et le label (L) acquis audit bloc de labellisation (30) seulement si le label (L) acquis et l'au moins un attribut représentant la sensibilité déterminé sont cohérents.

9. Dispositif électronique de labellisation (10) selon l'une quelconque des revendications 6 à 8, dans lequel le module d'acquisition (12) comprend une pluralité de blocs d'acquisition (28), chaque bloc d'acquisition (28) étant associé à au moins un attribut représentatif d'un niveau de sensibilité, chaque bloc d'acquisition (28) étant configuré pour acquérir une donnée (D) et un label (L) dont un ou des attributs sont représentatif(s) d'une sensibilité correspondant à l'au moins un attribut associé audit bloc d'acquisition (28).

10. Dispositif électronique de labellisation (10) selon la revendication 9, comprenant un module d'identification (22) configuré pour identifier un utilisateur du dispositif, le module d'identification (22) étant configuré pour déterminer le bloc d'acquisition (28) attribué à l'utilisateur en fonction de l'identification de l'utilisateur.

11. Dispositif électronique de labellisation (10) selon l'une quelconque des revendications précédentes, dans lequel la donnée labellisée (LD) par le label (L) est chiffrée par une clé à laquelle le label (L) est associé.

12. Procédé de labellisation (100) mis en oeuvre par un dispositif électronique de labellisation (10) selon l'une quelconque des revendications précédentes, dans lequel le procédé (100) comprend les étapes suivantes :
- acquisition (110) par le module d'acquisition (12) du dispositif électronique de labellisation (10) d'une donnée (D) à labelliser,
- détermination (120) par le module de détermination (14) du dispositif électronique de labellisation (10), en fonction de la donnée (D) à labelliser acquise, d'au moins un attribut représentatif d'une sensibilité associée à ladite donnée (D), le module de détermination transmettant la donnée (D) acquise au bloc de labellisation (30) du dispositif électronique de labellisation (10) dont l'au moins un attribut représentant la sensibilité correspond à un ou des attributs déterminé(s) par le module de détermination (14), et
- labellisation (130) par ledit bloc de labélisation (30), par association à la donnée (D) acquise d'un label (L) représentatif de l'au moins un attribut déterminé, pour produire une donnée labellisée (LD).

## Patentansprüche

1. Elektronische Datenetikettiervorrichtung (10), die konfiguriert ist, um ein Etikett (L) mit Daten (D) zu assoziieren, die elektronische Etikettiervorrichtung (10) umfassend:
- ein Erfassungsmodul (12), das konfiguriert ist, um zu etikettierenden Daten (D) zu erfassen,
- ein Bestimmungsmodul (14), das konfiguriert ist, um abhängig von den erfassten zu etikettierenden Daten (D), mindestens ein Attribut zu bestimmen, das repräsentativ für eine Empfindlichkeit ist, die mit den Daten (D) assoziiert ist;
- ein Etikettiermodul (16), umfassend eine Vielzahl von Etikettierblöcken (30), wobei jeder Etikettierblock (30) mit einer durch mindestens ein Attribut repräsentierten Empfindlichkeit assoziiert ist,
wobei das Bestimmungsmodul (14) konfiguriert ist, um die erfassten Daten (D) an den Etikettierblock (30) zu übertragen, dessen mindestens ein die Empfindlichkeit repräsentierendes Attribut einem oder mehreren durch das Bestimmungsmodul (14) bestimmten Attribut(en) entspricht, wobei der genannte Etikettierblock (30) konfiguriert ist, um durch Assoziieren eines für das mindestens eine bestimmte Attribut repräsentativen Etiketts (L) mit den erfassten Daten (D) etikettierte Daten (LD) zu erzeugen.

2. Elektronische Etikettiervorrichtung (10) nach Anspruch 1, in der das Bestimmungsmodul (14) in Form von mindestens einer ASIC- oder FPGA-Schaltung ausgeführt ist.

3. Elektronische Etikettiervorrichtung (10) nach Anspruch 1 oder 2, in der das Etikettiermodul (16) drei Etikettierblöcke (30) umfasst.

4. Elektronische Etikettiervorrichtung (10) nach einem der vorherigen Ansprüche, umfassend ein erstes ergänzendes Analysemodul (18), das mit dem Bestimmungsmodul (14) verbunden ist, wobei das erste ergänzende Analysemodul (18) konfiguriert ist, um abhängig von den erfassten zu etikettierenden Daten (D) erste Analysedaten (AD1) zu bestimmen, die repräsentativ für ein Attribut sind, das repräsentativ für ein Empfindlichkeitsniveau ist, das mit den Daten (D) assoziiert ist, wobei das Bestimmungsmodul konfiguriert ist, um das mindestens eine Attribut, das repräsentativ für eine Empfindlichkeit ist, die mit den Daten (D) assoziiert ist, ferner abhängig von den durch das erste ergänzende Analysemodul (18) bestimmten ersten Analysedaten (AD1) zu bestimmen.

5. Elektronische Etikettiervorrichtung nach einem der vorherigen Ansprüche, umfassend ein zweites ergänzendes Analysemodul (20), das mit dem Bestimmungsmodul (16) verbunden ist, wobei das zweite ergänzende Analysemodul (20) konfiguriert ist, um zweite ergänzende Analysedaten (AD2) von einer Mensch-Maschine-Schnittstelle (27) zu erfassen, wobei das Bestimmungsmodul (14) konfiguriert ist, um das mindestens eine Attribut, das repräsentativ für eine Empfindlichkeit ist, die mit den Daten (D) assoziiert ist, ferner abhängig von den durch das zweite ergänzende Analysemodul (20) erfassten zweiten ergänzenden Analysedaten (AD2) zu bestimmen.

6. Elektronische Etikettiervorrichtung (10) nach einem der vorherigen Ansprüche, wobei das Bestimmungsmodul (14) konfiguriert ist, um ein Etikett (L) zu erfassen, das mit den zu etikettierenden Daten (D) assoziiert werden soll, wobei der Etikettierblock (30) konfiguriert ist, um abhängig von dem erfassten Etikett (L) etikettierte Daten (LD) zu erzeugen.

7. Elektronische Etikettiervorrichtung (10) nach Anspruch 6, wobei das Bestimmungsmodul (14) konfiguriert ist, um mit dem erfassten Etikett eine Signatur zu assoziieren, wobei der Etikettierblock (30) konfiguriert ist, um die etikettierten Daten (30) ferner abhängig von der Signatur zu erzeugen.

8. Elektronische Etikettiervorrichtung (10) nach einem der Ansprüche 6 oder 7, wobei das Bestimmungsmodul (14) konfiguriert ist, um die Kohärenz zwischen dem erfassten Etikett (L) und dem mindestens einen bestimmten die Empfindlichkeit repräsentierenden Attribut zu bestimmen,
wobei das Bestimmungsmodul (14) konfiguriert ist, um die erfassten Daten (D) und das erfasste Etikett (L) nur dann an den Etikettierblock (30) zu übertragen, wenn das erfasste Etikett (L) und das mindestens eine bestimmte die Empfindlichkeit repräsentierende Attribut kohärent sind.

9. Elektronische Etikettiervorrichtung (10) nach einem der Ansprüche 6 bis 8, wobei das Erfassungsmodul (12) eine Vielzahl von Erfassungsblöcken (28) umfasst, wobei jeder Erfassungsblock (28) mit mindestens einem für einen Empfindlichkeitsgrad repräsentativen Attribut assoziiert ist, wobei jeder Erfassungsblock (28) konfiguriert ist, um Daten (D) und ein Etikett (L) zu erfassen, deren ein oder mehrere Attribute repräsentativ für eine Empfindlichkeit sind, die dem mindestens einen Attribut entspricht, das mit dem Erfassungsblock (28) assoziiert ist.

10. Elektronische Etikettiervorrichtung (10) nach Anspruch 9, umfassend ein Identifikationsmodul (22), das konfiguriert ist, um einen Benutzer der Vorrichtung zu identifizieren, wobei das Identifikationsmodul (22) konfiguriert ist, um den Erfassungsblock (28), der dem Benutzer zugewiesen ist, abhängig von der Identifikation des Benutzers zu bestimmen.

11. Elektronische Etikettiervorrichtung (10) nach einem der vorherigen Ansprüche, wobei die durch das Etikett (L) etikettierten Daten (LD) durch einen Schlüssel verschlüsselt sind, mit dem das Etikett (L) assoziiert ist.

12. Etikettierverfahren (100), das durch eine elektronische Etikettiervorrichtung (10) nach einem der vorherigen Ansprüche durchgeführt wird, wobei das Verfahren (100) die folgenden Schritte umfasst:
- Erfassen (110), durch das Erfassungsmodul (12), von zu etikettierenden Daten (D) der elektronischen Etikettiervorrichtung (10),
- Bestimmen (120), durch das Bestimmungsmodul (14) der elektronischen Etikettiervorrichtung (10), abhängig von den erfassten zu etikettierenden Daten (D), mindestens eines Attributs, das repräsentativ für eine mit den Daten (D) assoziierte Empfindlichkeit ist, wobei das Bestimmungsmodul die erfassten Daten (D) an den Etikettierblock (30) der elektronischen Etikettiervorrichtung (10) überträgt, dessen mindestens ein Attribut, das repräsentativ für die Empfindlichkeit ist, einem oder mehreren durch das Bestimmungsmodul (14) bestimmten Attribut(en) entspricht, und
- Etikettieren (130) durch den Etikettierblock (30) durch Assoziieren eines für das mindestens ein bestimmtes Attribut repräsentativen Etiketts (L) mit den erfassten Daten (D), um etikettierte Daten (LD) zu erzeugen.

## Claims

1. An electronic labeling device (10), for data, configured to associate a label (L) with data (D), the electronic labeling device (10) comprising:
- an acquisition module (12), configured to acquire data (D) to be labeled,
- a determination module (14), configured to, as a function of the acquired data (D) to be labeled, determine at least one attribute representative of a sensitivity associated with said data (D);
- a labeling module (16), comprising a plurality of labeling blocks (30), each labeling block (30) being associated with a sensitivity represented by at least one attribute,
the determination module (14) being configured to transmit the acquired data (D) to the labeling block (30) of which the at least one attribute representing the sensitivity corresponds to one or more attributes determined by the determination module (14), said labeling block (30) being configured to produce labeled data (LD) by associating with the acquired data (D) a label (L) representative of the at least one determined attribute.

2. The electronic labeling device (10) according to claim 1, wherein the determination module (14) is realized in the form of at least one ASIC or FPGA circuit.

3. The electronic labeling device (10) according to claim 1 or 2, wherein the labeling module (16) comprises three labeling blocks (30).

4. The electronic labeling device (10) according to any one of the preceding claims, comprising a first complementary analysis module (18) connected to the determination module (14), the first complementary analysis module (18) being configured to, as a function of the acquired data (D) to be labeled, determine first analysis data (AD1) representative of an attribute representative of a sensitivity level associated with said data (D), the determination module being configured to determine the at least one attribute representative of a sensitivity associated with said data (D) furthermore as a function of the first analysis data (AD1) determined by the first complementary analysis module (18).

5. The electronic labeling device according to any one of the preceding claims, comprising a second complementary analysis module (20) connected to the determination module (16), the second complementary analysis module (20) being configured to acquire second complementary analysis data (AD2) from a human-machine interface (27), the determination module (14) being configured to determine the at least one attribute representative of a sensitivity associated with said data (D) furthermore as a function of the second complementary analysis data (AD2) acquired by the second complementary analysis module (20).

6. The electronic labeling device (10) according to any one of the preceding claims, wherein the determination module (14) is configured to acquire a label (L) to be associated with the data (D) to be labeled, said labeling block (30) being configured to produce labeled data (LD) as a function of said acquired label (L).

7. The electronic labeling device (10) according to claim 6, wherein the determination module (14) is configured to associate a signature with the acquired label, said labeling block (30) being configured to produce labeled data (30) furthermore as a function of the signature.

8. The electronic labeling device (10) according to any one of claims 6 or 7, wherein the determination module (14) is configured to determine the consistency between the acquired label (L) and the at least one attribute representing the determined sensitivity, the determination module (14) being configured to transmit the acquired data (D) and the acquired label (L) to said labeling block (30) only if the acquired label (L) and the at least one attribute representing the determined sensitivity are consistent.

9. The electronic labeling device (10) according to any one of claims 6 to 8, wherein the acquisition module (12) comprises a plurality of acquisition blocks (28), each acquisition block (28) being associated with at least one attribute representative of a sensitivity level, each acquisition block (28) being configured to acquire data (D) and a label (L) of which one or more attributes are representative of a sensitivity corresponding to the at least one attribute associated with said acquisition block (28).

10. The electronic labeling device (10) according to claim 9, comprising an identification module (22) configured to identify a user of the device, the identification module (22) being configured to determine the acquisition block (28) assigned to the user as a function of the identification of the user.

11. The electronic labeling device (10) according to any one of the preceding claims, wherein the data (LD) labeled by the label (L) is encrypted by a key to which the label (L) is associated.

12. A labeling method (100) implemented by an electronic labeling device (10) according to any one of the preceding claims, wherein the method (100) comprises the following steps:
- acquisition (110) by the acquisition module (12) of the electronic labeling device (10) of data (D) to be labeled,
- determination (120) by the determination module (14) of the electronic labeling device (10), as a function of the acquired data (D) to be labeled, of at least one attribute representative of a sensitivity associated with said data (D), the determination module transmitting the acquired data (D) to the labeling block (30) of the electronic labeling device (10) of which the at least one attribute representing the sensitivity corresponds to one or more attributes determined by the determination module (14), and
- labeling (130) by said labeling block (30), by association with the acquired data (D) of a label (L) representative of the at least one determined attribute, to produce labeled data (LD).
